# EUROPEAN PATENT SPECIFICATION

(11) **EP 2 996 301 B1**
(45) Date of publication and mention of the grant of the patent: **22.01.2020**
(21) Application number: 14382345.8
(22) Date of filing: 12.09.2014
(51) Int. Cl.: H04L 29/06

(54) **MULTI-PROTOCOL PRODUCT LINE INTEGRATION SYSTEM**
MEHRFACHPROTOKOLL-PRODUKTLINIENINTEGRATIONSSYSTEM
SYSTÈME D'INTÉGRATION DE LIGNE DE PRODUIT MULTIPROTOCOLE

(43) Date of publication of application: 16.03.2016
(73) Proprietor: UTC Fire & Security EMEA BVBA, 1831 Diegem (BE)
(72) Inventor: Morgado Romero, Rubén, 08950 Esplugues de Llobregat, Barcelona (ES); Pérez Gandara, Miguel Ángel, 08950 Esplugues de Llobregat, Barcelona (ES)
(74) Representative: Stiebe, Lars Magnus

(56) References cited:
- WO-A1-2008/116284
- WO-A2-2007/030267
- US-B2- 7 894 476

## Description

### TECHNICAL FIELD

The present invention is generally related to multiprotocol communication systems, and more specifically, to a multiprotocol product line integration system.

### BACKGROUND

Manufacturers of emergency systems such as, for example, fire and security alert systems, typically use individually customized proprietary communication protocols for communicating data between the control units and the devices installed in the system. Therefore, a single hardware platform is implemented by each individual manufacturer to support the respective proprietary communication protocol.

Overtime, multiple system manufacturers can be acquired by a single business entity. However, the business entity can have difficulty leveraging the acquired emergency systems as a single system without disturbing customer service due to the different proprietary communication protocols designed for each system.

WO 2007/030267 A2 discloses a universal event/data recorder system that provides a common bridge between various event/data recorders found on mobile assets

WO 2008/116284 A1 discloses a system for routing alarm-related calls to a plurality of communication networks.

US 7894476 B2 discloses a system for managing data transmission for a medical device that has several transmission protocols, each having a different designation.

### SUMMARY

The invention is defined by a system according to claim 1 and by a method according to claim 9. Further embodiments are set out in the dependent claims.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a diagram of a multiprotocol product line integration system configured to integrate different product lines into a single hardware platform according to an exemplary embodiment;
FIG. 2 is a diagram of a control unit hardware interface included in a multiprotocol product line integration system according to an exemplary embodiment;
FIG. 3 is a diagram of a device hardware interface included in a multiprotocol product line integration system according to an exemplary embodiment;
FIG. 4 is a flow diagram illustrating a method of controlling a multiprotocol product line integration system to adaptively configure a control unit hardware interface for establishing communication between a multiprotocol control module and a multiprotocol device according to an exemplary embodiment; and
FIG. 5 is a flow diagram illustrating a method of controlling a multiprotocol product line integration system to adaptively configure a device hardware interface for establishing communication between a multiprotocol control module and a multiprotocol device according to an exemplary embodiment.

### DETAILED DESCRIPTION OF THE INVENTION

At least one embodiment provides a multiprotocol product line integration system that is configured to dynamically control the internal transmission and/or reception circuitry such that signals from a plurality of different communication protocols can be transmitted and/or received. The internal transmission and/or reception circuitry can adapt to different protocols of a respective product line by dynamically controlling the circuitry and/or software to operate according to system parameters indicated by a respective protocol stored in a protocol stack. For example, the multiprotocol product line integration system is configured to select a protocol corresponding to a particular product line from a plurality of different protocols stored in a protocol stack. The selected protocol specifies various circuitry parameters including, but not limited to, the input power, current level, current directions, etc. The multiprotocol product line integration system is configured to control and drive the circuitry to achieve the parameters specified by the selected protocol. Accordingly, a single hardware platform may be provided that integrates multiple protocols corresponding to a respective product line.

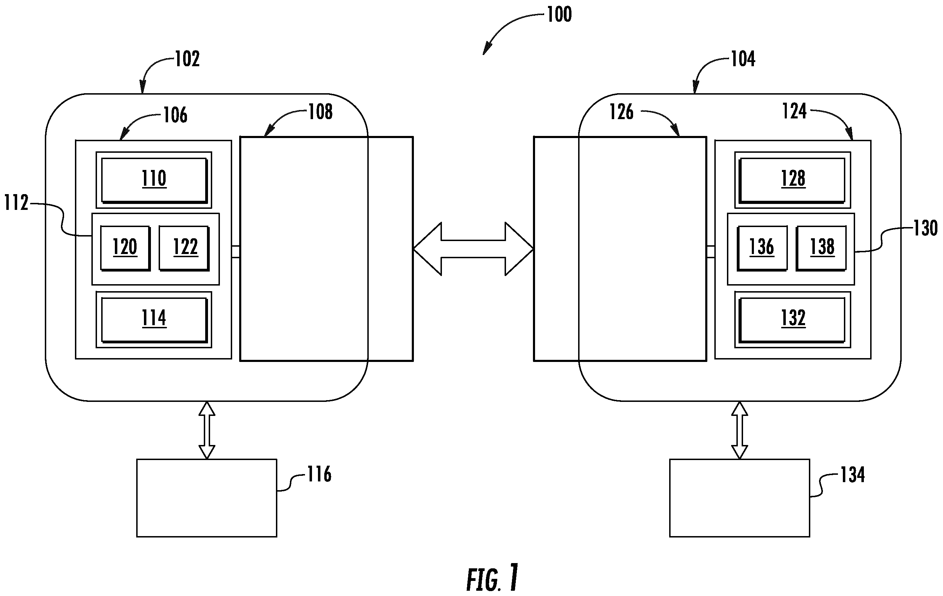

Referring now to FIG. 1, a multiprotocol product line integration system 100 configured to integrate different product lines into a single hardware platform is illustrated according to an exemplary embodiment. The system 100 includes an electronic multiprotocol control module 102 in electrical communication with one or more multiprotocol devices 104. The multiprotocol control module 102 may be electrically wired to a respective multiprotocol device 104, and/or may communicate with one or more multiprotocol devices 104 wirelessly. According to an embodiment, the multiprotocol module 102 may detect the connection of one or more multiprotocol devices 104 even though full communication capabilities are not yet established. For example, the multiprotocol module 102 may detect a power signal provided by a newly installed (i.e., connected) multiprotocol device 104 prior to determining the proper protocol for establishing full communication. Full communication includes, for example, capability of the multiprotocol control module 102 to fully realize an event detected by a respective multiprotocol device 104. In response to detecting the presence of the multiprotocol device 104, the multiprotocol control module 102 may automatically request an identification signal from the multiprotocol device 104. Based on the identification signal, the multiprotocol control module 102 may select the proper protocol necessary to establish full communication between the multiprotocol control module and the newly installed multiprotocol device 104.

The multiprotocol devices 104 may include a variety of devices manufactured by different product line manufactures. The multiprotocol control module 102 and the multiprotocol device 104 each store a plurality of protocols that indicate circuit parameters necessary to establish communication with one more of the multiprotocol devices 104 as discussed in greater detail below. The protocols may correspond to independently designed product lines including, but not limited to, fire and security product lines.

Once communication is established, the multiprotocol control module 102 may determine a status and/or control the settings of one or more of the multiprotocol devices 104. The multiprotocol devices 104, in turn, may communicate information to the multiprotocol control module 102. The information may alert the multiprotocol control module 102 to various events including, but not limited to, fire events, security breach events, and intruder alert events. Although selection of a single protocol is described above, it is appreciated that several common and/or different protocols can be supported and executed simultaneously.

The multiprotocol control module 102 includes an electronic adaptive control unit 106 in electrical communication with a control unit hardware interface 108. The adaptive control unit 106 includes an electronic application module 110, an electronic protocol module 112, and an electronic microprocessor 114. The multiprotocol control module 102 may also communicate with a graphical user interface (GUI) 116 displayed on a screen. In this manner, a user may select a one or more protocols stored in the protocol module 112 for establishing communication with one or more multiprotocol devices 104.

The electronic application module 110 may store software applications that facilitate interaction between the multiprotocol control module 102 and one or more multiprotocol devices 104. For example, a software application may display various selectable operating modes of a respective multiprotocol device 104. According to another example, a software application may generate a graphical interface displaying the available protocols stored in the protocol module 112. According to yet another example, the software application may generate a graphical interface that displays various operating states of each multiprotocol device 104. For instance, one or more multiprotocol devices 104 may detect an event (e.g., fire events, security breach events, and intruder alert events) and output an alert signal indicating the detected event. The multiprotocol control module 102 may receive the alert signal, and display an alert in the graphical interface alerting to the event detected by a respective multiprotocol device 104.

The protocol module 112 stores a standard protocol stack 120 and a legacy protocol stack 122. The standard protocol stack 120 includes one or more standard (i.e., up-to-date) protocols, while the legacy protocol stack 122 includes one or more legacy (i.e., outdated) protocols defined by a product line manufacturer. Each of the standard protocols and/or the legacy protocols define one or more circuit parameters included in the control unit hardware interface 108 necessary for establishing communication with a respective multiprotocol device 104. The circuit parameters include, but are not limited to, voltage levels, modulation frequency, transmission speed, transmission timing, circuit impedance, input power, current level, and current directions. According to an embodiment, additional protocols may be subsequently stored, and/or downloaded into the standard protocol stack 120 and/or the legacy protocol stack 122.

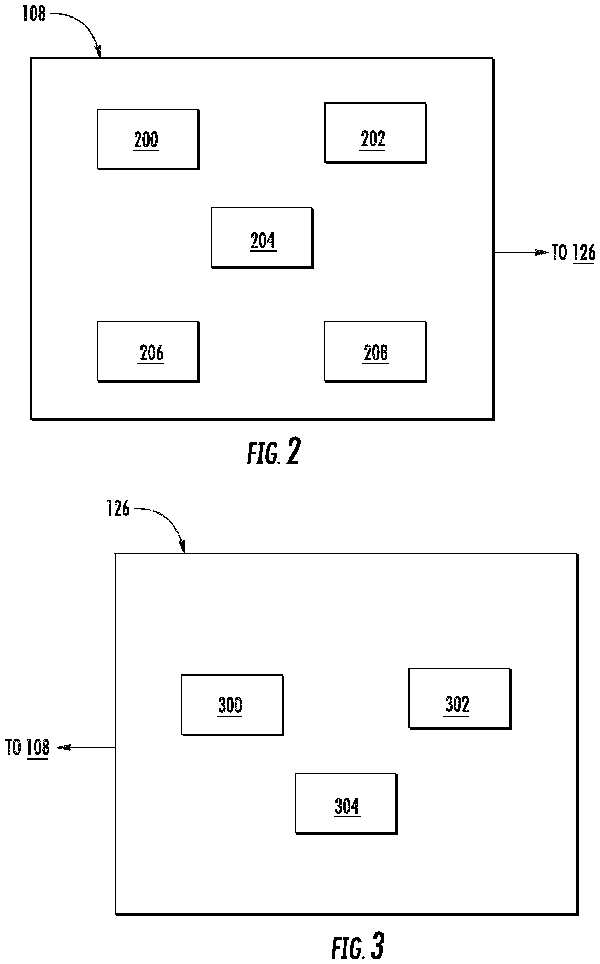

Turning to FIG. 2, the control unit hardware interface 108 is illustrated in greater detail. The control unit hardware interface 108 includes electrical circuitry that is dynamically adjusted based on the plurality of communication protocols stored in the multiprotocol control module 102. The electrical circuitry includes a configurable DC/DC converter module 200, a modulator module 202, a configurable current limiting module 204, a configurable transmission path routing module 206, and a configurable impedance module 208. The DC/DC converter module 200 may be controlled to output a desired voltage transmission level defined by a selected protocol. The modulator module 202 is configured to switch between a plurality of voltage transmission levels output by the DC/DC converter module 200. Accordingly, the modulator module 202 can generate a required bit frame transmission rate and protocol speed defined by a selected protocol necessary to communicate with a respective multiprotocol device 104. The configurable current limiting module 204 can be controlled to limit the current of one or more communication signals generated by the multiprotocol control module 102 to a current level defined by a selected protocol. The configurable transmission path routing module 206 can be controlled to select a transmission scheme defined by a selected protocol for transmitting one or more communication signals between the multiprotocol control module 102 and a respective multiprotocol device 104. The configurable impedance module 208 can be tuned to achieve an impedance of the multiprotocol control module 102 defined by a selected protocol.

The microprocessor 114 is configured to control the parameters of each module 200-208 based on the parameters defined by a respective protocol selected from the standard protocol stack 120 or the legacy protocol stack 122. For example, a protocol selected from the standard protocol stack 120 for communicating with a respective multiprotocol device 104 may define a voltage transmission level of, for example, 20 volts (V). Based on the selected standard protocol, the microprocessor 114 outputs a command signal to the DC/DC converter module 200. In response to the command signal, the DC/DC converter module 200 generates a voltage transmission level of 20V to establish communication between the multiprotocol control module 102 and the multiprotocol device 104 corresponding to the selected standard protocol.

Referring back to FIG. 1, each multiprotocol device 104 includes an electronic adaptive device control module 124 in electrical communication with a device unit hardware interface 126. The adaptive device control module 124 includes an electronic device application module 128, an electronic device protocol module 130, and an electronic device microprocessor 132. Each multiprotocol device 104 may also communicate with a graphical user interface (GUI) 134 displayed on a screen. In this manner, a user may select a one or more protocols stored in the device protocol module 130 for establishing communication between one or more multiprotocol devices 104 and the multiprotocol control module 102.

The device application module 128 may store one or more software applications that facilitate interaction between the multiprotocol device 104 and the multiprotocol control module 102. For example, a software application may display various selectable operating modes of the multiprotocol device 104. According to another example, a software application may generate a graphical interface displaying the available protocols stored in the device protocol module 130. According to yet another example, a software application may generate a graphical interface that displays various operating states of the multiprotocol device 104 and/or the multiprotocol control module 102. For instance, one or more multiprotocol devices 104 may detect an event (e.g., fire events, security breach events, and intruder alert events) and display an alert related to the detected event on the graphical interface 134. The graphical interface may also indicate whether the multiprotocol control module 102 is online and/or communicating fully (full operating control) or partially (detecting only a power signal or installation) with the multiprotocol device 104.

The device protocol module 130 stores a standard protocol stack 136 and a legacy protocol stack 138. The standard protocol stack 136 includes one or more standard (i.e., up-to-date) protocols, while the legacy protocol stack 138 includes one or more legacy (i.e., outdated) protocols defined by a product line manufacturer. Each of the standard protocols and/or the legacy protocols define one or more circuit parameters included in the device hardware interface 126 necessary for establishing communication with the multiprotocol control module 102. The circuit parameters include, but are not limited to, voltage levels, modulation frequency, transmission speed, transmission timing, circuit impedance, input power, current level, and current directions. According to an embodiment, the additional protocols may be stored and/or downloaded into the standard protocol stack 136 and/or the legacy protocol stack 138.

Turning now to FIG. 3, the device hardware interface 126 is illustrated in greater detail. The device hardware interface 126 includes electrical circuitry that is dynamically adjusted based on the plurality of communication protocols stored in the multiprotocol device 104. The electrical circuitry includes a configurable voltage reception module 300, a configurable current transmission module 302, and a configurable transmission path module 304. The voltage reception module 300 is configured to adapt the impedance and the bus voltage levels down to respective levels of the device microcontroller 132 defined by a selected protocol. The current transmission module 302 is configured to fix the transmission current levels defined by a selected protocol. The transmission path module 304 is configured to control a transmission path for transmitting a communication signal to the multiprotocol control module 102 according to routing scheme defined by a selected protocol.

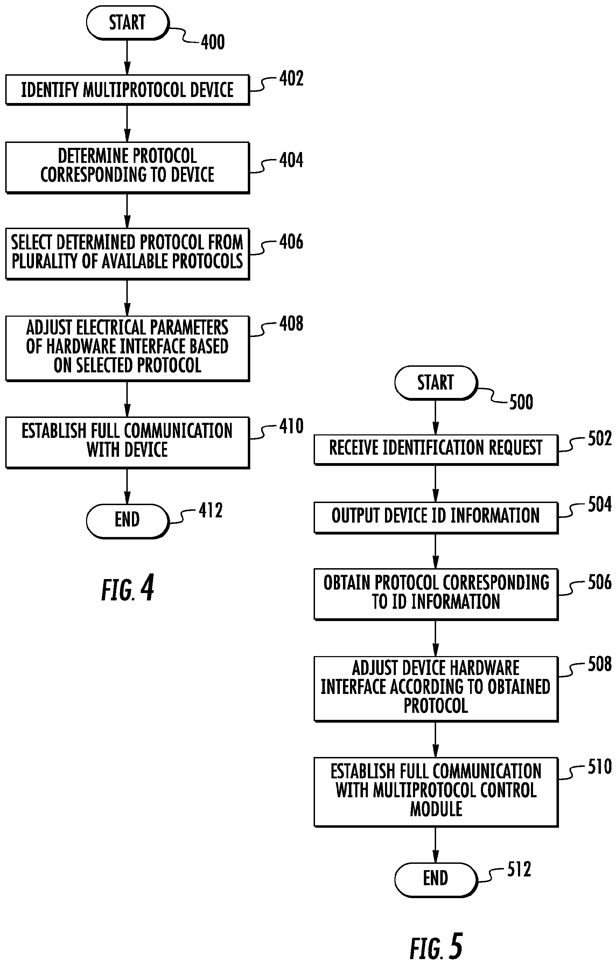

Referring now to FIG. 4, a flow diagram illustrates a method of controlling a multiprotocol product line integration system to dynamically configure a control unit hardware interface for establishing communication between a multiprotocol control module and a multiprotocol device according to an exemplary embodiment. The method begins at operation 400, and at operation 402 one or more multiprotocol devices are identified. According to at least one embodiment, the multiprotocol control module may detect a power signal from a respective multiprotocol device that is installed in the multiprotocol product line integration system. At operation 404, the protocol corresponding to the installed multiprotocol device is determined. According to an embodiment, the multiprotocol device may output an identification signal indicating the protocol. According to another embodiment, the protocol of the multiprotocol device may be input to the multiprotocol control module by a user. At operation 406, the determined protocol is selected from a plurality of available protocols. According to an embodiment, the determined protocol is selected from a standard protocol stack or a legacy protocol stack stored in the multiprotocol control module. At operation 408, one or more electrical parameters of the control unit hardware interface are adjusted based on the selected protocol. At operation 410, full communication (e.g., remote device settings control, event detection alerts, etc.) between the multiprotocol control module and the respective multiprotocol device is established, and the method ends at operation 412.

Turning to FIG. 5, a flow diagram illustrates a method of controlling a multiprotocol product line integration system to dynamically configure a device hardware interface for establishing communication between a multiprotocol control module and a multiprotocol device according to an exemplary embodiment. The method begins at operation 500, and at operation 502 an identification request is received. The identification request may be automatically received from the multiprotocol control module in response to installing the multiprotocol device in the multiprotocol product line integration system. The request may also be received via an input to the multiprotocol device from a user. At operation 504, the multiprotocol device outputs identification information identifying the protocol corresponding to the device. The identification information may be output to the multiprotocol control module and/or displayed to a user via a GUI at the multiprotocol device. At operation 506, a protocol corresponding to the identification information is obtained. The protocol may be transmitted from the multiprotocol control module to the multiprotocol device and/or may be retrieved from a standard protocol stack or a legacy protocol stack stored in the multiprotocol device. At operation 508, one or more electrical parameters of the device hardware interface are adjusted based on the selected protocol. At operation 510, full communication (e.g., remote device settings control, event detection alerts, etc.) between the multiprotocol device and the multiprotocol control module is established, and the method ends at operation 512.

As used herein, the term module refers to processing circuitry that may include an application specific integrated circuit (ASIC), an electronic circuit, an electronic processor (shared, dedicated, or group) and memory that executes one or more software or firmware programs, a combinational logic circuit, and/or other suitable components that provide the described functionality.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A multiprotocol product line integration emergency alert system comprising:
a multiprotocol control module configured to store a plurality of communication protocols;
at least one multiprotocol device configured to detect at least one event, and to communicate data over the system according to a respective device protocol; and
at least one hardware interface in electrical communication with the multiprotocol control module and the at least one multiprotocol device to communicate data therebetween, the at least one hardware interface including electrical circuitry that is dynamically adjusted based on the plurality of communication protocols,
wherein the multiprotocol control module determines the device protocol and selects a communication protocol that matches the device protocol from among the plurality of stored communication protocols to adjust the at least one electrical circuitry such that the detected at least one event is electrically communicated to the multiprotocol control module;
wherein the electrical circuitry adjusts electrical parameters controlling communication between the multiprotocol control module and the at least one multiprotocol device based on at least one of at least one standard protocol and at least one legacy protocol, the electrical parameters including at least one of voltage level, modulation frequency, transmission speed, transmission timing, circuit impedance, input power, current level, and current direction;
wherein the event is at least one of a fire alert, a security breach alert, and an intruder alert, and wherein the multiprotocol control module outputs an alert signal indicating the detected event.

2. The multiprotocol product line integration emergency alert system of claim 1, wherein the multiprotocol control module determines the device protocol in response to receiving an identification signal.

3. The multiprotocol product line integration emergency alert system of claim 2, wherein the at least one multiprotocol device outputs the identification signal identifying the respective device protocol, and the multiprotocol control module selects the matching communication based on the identification signal.

4. The multiprotocol product line integration emergency alert system of claim 3, wherein the multiprotocol control module automatically outputs a request signal requesting the identification signal in response to installing the at least one multiprotocol device in the system.

5. The multiprotocol product line integration emergency alert system of claim 2, wherein the identification signal is input by a user.

6. The multiprotocol product line integration emergency alert system of claim 2, wherein at least one of the multiprotocol control module and the at least one multiprotocol device includes a protocol module storing the at least one standard protocol and the at least one legacy protocol different from the standard protocol.

7. The multiprotocol product line integration emergency alert system of any of claims 1-6, wherein the electrical circuitry includes a configurable DC/DC converter module, a modulator module, a configurable current limiting module, a configurable transmission path routing module and a configurable impedance module; wherein the electrical circuitry controls an output voltage transmission level of the DC/DC converter module; wherein the electrical circuitry further controls the modulator module to generate a required bit frame transmission rate and protocol speed; wherein the electrical circuitry further controls the current limiting module to limit the current of one or more communication signals generated by the multiprotocol control module; wherein the electrical circuitry further controls the transmission path routing module to select a transmission scheme; and wherein the electrical circuitry tunes the impedance module to achieve a defined impedance.

8. The multiprotocol product line integration emergency alert system of any of claims 1-7, wherein the at least one hardware interface is within the multiprotocol control module.

9. A method of controlling a multiprotocol product line integration emergency alert system, the method comprising:
storing, by a multiprotocol control module located remotely from at least one multiprotocol device installed in the system, a plurality of communication protocols;
determining, by the multiprotocol control module, a device protocol of the at least one multiprotocol device installed in the system;
selecting, by the multiprotocol control module, a first communication protocol that matches the device protocol from among the plurality of communication protocols; and
based on the selected first communication protocol, dynamically adjusting a hardware interface in signal communication with the at least one multiprotocol device such that an event detected by the at least one multiprotocol device is electrically communicated to the multiprotocol control module;
wherein the dynamically adjusting a hardware interface includes adjusting electrical parameters of the hardware interface based on at least one standard protocol and at least one legacy protocol, the electrical parameters including at least one of voltage level, modulation frequency, transmission speed, transmission timing, circuit impedance, input power, current level, and current direction;
wherein the event is at least one of a fire alert, a security breach alert, and an intruder alert, and wherein the multiprotocol control module outputs an alert signal indicating the detected event.

10. The method of claim 9, further comprising determining the device protocol based on an identification signal.

11. The method of claim 10, further comprising outputting the identification signal from the at least one multiprotocol device, and selecting the matching communication based on the identification signal via the multiprotocol control module.

12. The method of claim 11, further comprising automatically outputting a request signal requesting the identification signal in response to installing the at least one multiprotocol device in the system.

13. The method of claim 10, further comprising inputting by a user the identification signal using a graphic user interface provided at the multiprotocol control module.

14. The method of claim 10, storing the at least one standard protocol and the at least one legacy protocol different from the standard protocol in at least one of the multiprotocol control module and the at least one multiprotocol device.

15. The method of any of claims 9-14, wherein the dynamically adjusting a hardware interface includes: controlling an output voltage transmission level of a configurable DC/DC converter module; controlling a modulator to generate a required bit frame transmission rate and protocol speed; controlling a configurable current limiting module to limit the current of one or more communication signals generated by the multiprotocol control module; controlling a configurable transmission path routing module to select a transmission scheme; and tuning a configurable impedance module to achieve a defined impedance.

16. The method of any of claims 9-15, wherein the hardware interface is within the multiprotocol control module.

## Patentansprüche

1. Mehrfachprotokoll-Produktlinienintegrations-Notfallalarmsystem, das aufweist:
ein Mehrfachprotokoll-Steuermodul, das derart ausgebildet ist, dass es eine Vielzahl von Kommunikationsprotokollen speichert;
mindestens eine Mehrfachprotokoll-Vorrichtung, die derart ausgebildet ist, dass sie mindestens ein Ereignis detektiert und Daten gemäß einem jeweiligen Vorrichtungsprotokoll über das System überträgt; und
mindestens eine Hardwareschnittstelle in elektrischer Kommunikation mit dem Mehrfachprotokoll-Steuermodul und der mindestens einen Mehrfachprotokoll-Vorrichtung zum Übertragen von Daten zwischen diesen, wobei die mindestens eine Hardwareschnittstelle eine elektrische Schaltungsanordnung aufweist, die auf der Basis der Vielzahl von Kommunikationsprotokollen dynamisch eingestellt wird,
wobei das Mehrfachprotokoll-Steuermodul das Vorrichtungsprotokoll bestimmt und aus der Vielzahl von gespeicherten Kommunikationsprotokollen ein Kommunikationsprotokoll auswählt, das mit dem Vorrichtungsprotokoll übereinstimmt, um die mindestens eine elektrische Schaltungsanordnung derart einzustellen, dass das mindestens eine detektierte Ereignis elektrisch zu dem Mehrfachprotokoll-Steuermodul übertragen wird;
wobei die elektrische Schaltungsanordnung elektrische Parameter einstellt, die eine Kommunikation zwischen dem Mehrfachprotokoll-Steuermodul und der mindestens einen Mehrfachprotokoll-Vorrichtung auf der Basis mindestens eines von mindestens einem Standardprotokoll und mindestens einem Altprotokoll steuert, wobei die elektrischen Parameter mindestens eines von Spannungspegel, Modulationsfrequenz, Übermittlungsgeschwindigkeit, Übermittlungszeit, Schaltungsimpedanz, Eingangsleistung, Strompegel und Stromrichtung umfasst;
wobei das Ereignis mindestens eines von Feueralarm, Sicherheitsverstoßalarm und Eindringlingsalarm ist und wobei das Mehrfachprotokoll-Steuermodul ein Alarmsignal ausgibt, das das detektierte Ereignis anzeigt.

2. Mehrfachprotokoll-Produktlinienintegrations-Notfallalarmsystem nach Anspruch 1, bei dem das Mehrfachprotokoll-Steuermodul das Vorrichtungsprotokoll in Reaktion auf das Empfangen eines Identifikationssignals bestimmt.

3. Mehrfachprotokoll-Produktlinienintegrations-Notfallalarmsystem nach Anspruch 2, bei dem die mindestens eine Mehrfachprotokoll-Vorrichtung das Identifikationssignal ausgibt, das das jeweilige Vorrichtungsprotokoll identifiziert, und das Mehrfachprotokoll-Steuermodul die übereinstimmende Kommunikation auf der Basis des Identifikationssignals auswählt.

4. Mehrfachprotokoll-Produktlinienintegrations-Notfallalarmsystem nach Anspruch 3, bei dem das Mehrfachprotokoll-Steuermodul automatisch ein Anforderungssignal ausgibt, das das Identifikationssignal in Reaktion auf das Installieren der mindestens einen Mehrfachprotokoll-Vorrichtung in dem System anfordert.

5. Mehrfachprotokoll-Produktlinienintegrations-Notfallalarmsystem nach Anspruch 2, bei dem das Identifikationssignal von einem Benutzer eingegeben wird.

6. Mehrfachprotokoll-Produktlinienintegrations-Notfallalarmsystem nach Anspruch 2, bei dem mindestens eines des Mehrfachprotokoll-Steuermoduls und der mindestens einen Mehrfachprotokoll-Vorrichtung ein Protokollmodul aufweist, in dem das mindestens eine Standardprotokoll und das mindestens eine Altprotokoll, das sich von dem Standardprotokoll unterscheidet, gespeichert sind.

7. Mehrfachprotokoll-Produktlinienintegrations-Notfallalarmsystem nach einem der Ansprüche 1-6, bei dem die elektrische Schaltungsanordnung ein konfigurierbares DC/DC-Umwandlermodul, ein Modulatormodul, ein konfigurierbares Strombegrenzungsmodul, ein konfigurierbares Übermittlungsweg-Routingmodul und ein konfigurierbares Impedanzmodul aufweist; wobei die elektrische Schaltungsanordnung einen Ausgangsspannungs-Übermittlungspegel des DC/DC-Umwandlermoduls steuert; wobei die elektrische Schaltungsanordnung ferner das Modulatormodul zum Erzeugen einer erforderlichen Bitframeübermittlungsrate und Protokollgeschwindigkeit steuert; wobei die elektrische Schaltungsanordnung ferner das Strombegrenzungsmodul zum Begrenzen des Stroms eines oder mehrerer von dem Mehrfachprotokoll-Steuermodul erzeugter Kommunikationssignale steuert; wobei die elektrische Schaltungsanordnung ferner das Übermittlungsweg-Routingmodul zum Auswählen eines Übermittlungsschemas steuert; und wobei die elektrische Schaltungsanordnung das Impedanzmodul zum Erzielen einer definierten Impedanz abstimmt.

8. Mehrfachprotokoll-Produktlinienintegrations-Notfallalarmsystem nach einem der Ansprüche 1-7, bei dem die mindestens eine Hardwareschnittstelle in dem Mehrfachprotokoll-Steuermodul ist.

9. Verfahren zum Steuern eines Mehrfachprotokoll-Produktlinienintegrations-Notfallalarmsystems, wobei das Verfahren umfasst:
Speichern, durch ein entfernt von mindestens einer in dem System installierten Mehrfachprotokoll-Vorrichtung angeordneten Mehrfachprotokoll-Steuermodul, einer Vielzahl von Kommunikationsprotokollen;
Bestimmen, durch das Mehrfachprotokoll-Steuermodul, eines Vorrichtungsprotokolls der mindestens einen in dem System installierten Mehrfachprotokoll-Vorrichtung;
Auswählen, durch das Mehrfachprotokoll-Steuersystem, eines ersten Kommunikationsprotokolls, das mit dem Vorrichtungsprotokoll übereinstimmt, aus der Vielzahl von Kommunikationsprotokollen; und
auf der Basis des ausgewählten ersten Kommunikationsprotokolls dynamisches Einstellen einer Hardwareschnittstelle in Signalkommunikation mit der mindestens einen Mehrfachprotokoll-Vorrichtung derart, dass ein von der mindestens einen Mehrfachprotokoll-Vorrichtung detektiertes Ereignis elektrisch zu dem Mehrfachprotokoll-Steuermodul übertragen wird;
wobei das dynamische Einstellen einer Hardwareschnittstelle das Einstellen von elektrischen Parametern der Hardwareschnittstelle auf der Basis mindestens eines Standardprotokolls und mindestens eines Altprotokolls umfasst, wobei die elektrischen Parameter mindestens eines von Spannungspegel, Modulationsfrequenz, Übermittlungsgeschwindigkeit, Übermittlungszeit, Schaltungsimpedanz, Eingangsleistung, Strompegel und Stromrichtung umfasst;
wobei das Ereignis mindestens eines von Feueralarm, Sicherheitsverstoßalarm und Eindringlingsalarm ist und wobei das Mehrfachprotokoll-Steuermodul ein Alarmsignal ausgibt, das das detektierte Ereignis anzeigt.

10. Verfahren nach Anspruch 9, das ferner das Bestimmen des Vorrichtungsprotokolls auf der Basis eines Identifikationssignals umfasst.

11. Verfahren nach Anspruch 10, das ferner das Ausgeben des Identifikationssignals aus der mindestens einen Mehrfachprotokoll-Vorrichtung und das Auswählen der übereinstimmenden Kommunikation auf der Basis des Identifikationssignals über das Mehrfachprotokoll-Steuermodul umfasst.

12. Verfahren nach Anspruch 11, das ferner das automatische Ausgeben eines Anforderungssignals zum Anfordern des Identifikationssignals in Reaktion auf das Installieren der mindestens einen Mehrfachprotokoll-Vorrichtung in dem System umfasst.

13. Verfahren nach Anspruch 10, das ferner das Eingeben des Identifikationssignals durch einen Benutzer unter Verwendung einer an dem Mehrfachprotokoll-Steuermodul vorgesehenen grafischen Benutzerschnittstelle umfasst.

14. Verfahren nach Anspruch 10, bei dem das mindestens eine Standardprotokoll und das mindestens eine Altprotokoll, das sich von dem Standardprotokoll unterscheidet, in mindestens einem des Mehrfachprotokoll-Steuermoduls und der mindestens einen Mehrfachprotokoll-Vorrichtung gespeichert werden.

15. Verfahren nach einem der Ansprüche 9-14, bei dem das dynamische Einstellen einer Hardwareschnittstelle umfasst: Steuern eines Ausgangsspannungs-Übermittlungspegels eines konfigurierbaren DC/DC-Umwandlungsmoduls; Steuern eines Modulators zum Erzeugen einer erforderlichen Bitframe-Übermittlungsrate und Protokollgeschwindigkeit; Steuern eines konfigurierbaren Strombegrenzungsmoduls zum Begrenzen des Stroms eines oder mehrerer von dem Mehrfachprotokoll-Steuermodul erzeugter Kommunikationssignale; Steuern eines konfigurierbaren Übermittlungsweg-Routingmoduls zum Auswählen eines Übermittlungsschemas; und Abstimmen eines konfigurierbaren Impedanzmoduls zum Erzielen einer definierten Impedanz.

16. Verfahren nach einem der Ansprüche 9-15, bei dem die Hardwareschnittstelle in dem Mehrfachprotokoll-Steuermodul ist.

## Revendications

1. Système d'alerte d'urgence d'intégration de ligne de produits multiprotocole comprenant :
un module de commande multiprotocole configuré pour stocker une pluralité de protocoles de communication ;
au moins un dispositif multiprotocole configuré pour détecter au moins un événement, et pour communiquer des données sur le système selon un protocole de dispositif respectif; et
au moins une interface matérielle en communication électrique avec le module de commande multiprotocole et l'au moins un dispositif multiprotocole pour communiquer des données entre eux, l'au moins une interface matérielle comportant un ensemble de circuits électriques qui est ajusté dynamiquement sur la base de la pluralité de protocoles de communication,
dans lequel le module de commande multiprotocole détermine le protocole de dispositif et sélectionne un protocole de communication qui correspond au protocole de dispositif parmi la pluralité de protocoles de communication stockés pour ajuster l'au moins un ensemble de circuits électriques de sorte que l'au moins un événement détecté soit communiqué électriquement au module de commande multiprotocole ;
dans lequel l'ensemble de circuits électriques ajuste des paramètres électriques commandant la communication entre le module de commande multiprotocole et l'au moins un dispositif multiprotocole sur la base d'au moins l'un d'au moins un protocole standard et d'au moins un protocole existant, les paramètres électriques comportant au moins l'un parmi un niveau de tension, une fréquence de modulation, une vitesse de transmission, une date de transmission, une impédance de circuit, une puissance d'entrée, un niveau de courant, et une direction de courant ;
dans lequel l'événement est au moins l'un parmi une alerte de feu, une alerte de brèche de sécurité, et une alerte d'intrus, et dans lequel le module de commande multiprotocole délivre un signal d'alerte indiquant l'événement détecté.

2. Système d'alerte d'urgence d'intégration de ligne de produits multiprotocole selon la revendication 1, dans lequel le module de commande multiprotocole détermine le protocole de dispositif en réponse à la réception d'un signal d'identification.

3. Système d'alerte d'urgence d'intégration de ligne de produits multiprotocole selon la revendication 2, dans lequel l'au moins un dispositif multiprotocole délivre le signal d'identification identifiant le protocole de dispositif respectif, et le module de commande multiprotocole sélectionne la communication correspondante sur la base du signal d'identification.

4. Système d'alerte d'urgence d'intégration de ligne de produits multiprotocole selon la revendication 3, dans lequel le module de commande multiprotocole délivre automatiquement un signal de demande demandant le signal d'identification en réponse à l'installation de l'au moins un dispositif multiprotocole dans le système.

5. Système d'alerte d'urgence d'intégration de ligne de produits multiprotocole selon la revendication 2, dans lequel le signal d'identification est entré par un utilisateur.

6. Système d'alerte d'urgence d'intégration de ligne de produits multiprotocole selon la revendication 2, dans lequel au moins l'un du module de commande multiprotocole et de l'au moins un dispositif multiprotocole comporte un module de protocole stockant l'au moins un protocole standard et l'au moins un protocole existant différent du protocole standard.

7. Système d'alerte d'urgence d'intégration de ligne de produits multiprotocole selon l'une quelconque des revendications 1 à 6, dans lequel l'ensemble de circuits électriques comporte un module convertisseur CC/CC configurable, un module modulateur, un module de limitation de courant configurable, un module de routage de trajet de transmission configurable et un module d'impédance configurable ; dans lequel l'ensemble de circuits électriques commande un niveau de transmission de tension de sortie du module convertisseur CC/CC ; dans lequel l'ensemble de circuits électriques commande en outre le module modulateur pour générer un taux de transmission de trame binaire et une vitesse de protocole requis; dans lequel l'ensemble de circuits électriques commande en outre le module de limitation de courant pour limiter le courant d'un ou plusieurs signaux de communication générés par le module de commande multiprotocole; dans lequel l'ensemble de circuits électriques commande en outre le module de routage de trajet de transmission pour sélectionner un schéma de transmission; et dans lequel l'ensemble de circuits électriques accorde le module d'impédance pour atteindre une impédance définie.

8. Système d'alerte d'urgence d'intégration de lignes de produits multiprotocole selon l'une quelconque des revendications 1 à 7, dans lequel l'au moins une interface matérielle se trouve à l'intérieur du module de commande multiprotocole.

9. Procédé de commande d'un système d'alerte d'urgence d'intégration de ligne de produits multiprotocole, le procédé comprenant :
le stockage, par un module de commande multiprotocole situé à distance d'au moins un dispositif multiprotocole installé dans le système, d'une pluralité de protocoles de communication ;
la détermination, par le module de commande multiprotocole, d'un protocole de dispositif de l'au moins un dispositif multiprotocole installé dans le système ;
la sélection, par le module de commande multiprotocole, d'un premier protocole de communication qui correspond au protocole de dispositif parmi la pluralité de protocoles de communication ; et
sur la base du premier protocole de communication sélectionné, l'ajustement dynamique d'une interface matérielle en communication de signal avec l'au moins un dispositif multiprotocole de sorte qu'un événement détecté par l'au moins un dispositif multiprotocole soit communiqué électriquement au module de commande multiprotocole ;
dans lequel l'ajustement dynamique d'une interface matérielle comporte l'ajustement de paramètres électriques de l'interface matérielle sur la base d'au moins un protocole standard et d'au moins un protocole existant, les paramètres électriques comportant au moins l'un parmi un niveau de tension, une fréquence de modulation, une vitesse de transmission, une date de transmission, une impédance de circuit, une puissance d'entrée, un niveau de courant, et une direction de courant ;
dans lequel l'événement est au moins l'un parmi une alerte de feu, une alerte de brèche de sécurité, et une alerte d'intrus, et dans lequel le module de commande multiprotocole délivre un signal d'alerte indiquant l'événement détecté.

10. Procédé selon la revendication 9, comprenant en outre la détermination du protocole de dispositif sur la base d'un signal d'identification.

11. Procédé selon la revendication 10, comprenant en outre la fourniture du signal d'identification de l'au moins un dispositif multiprotocole, et la sélection de la communication correspondante sur la base du signal d'identification via le module de commande multiprotocole.

12. Procédé selon la revendication 11, comprenant en outre la fourniture automatique d'un signal de demande demandant le signal d'identification en réponse à l'installation de l'au moins un dispositif multiprotocole dans le système.

13. Procédé selon la revendication 10, comprenant en outre l'entrée par un utilisateur du signal d'identification en utilisant une interface utilisateur graphique fournie au niveau du module de commande multiprotocole.

14. Procédé selon la revendication 10, stockant l'au moins un protocole standard et l'au moins un protocole existant différent du protocole standard dans au moins l'un du module de commande multiprotocole et de l'au moins un dispositif multiprotocole.

15. Procédé selon l'une quelconque des revendications 9 à 14, dans lequel l'ajustement dynamique d'une interface matérielle comporte : la commande d'un niveau de transmission de tension de sortie d'un module convertisseur CC/CC configurable ; la commande d'un modulateur pour générer un taux de transmission de trame binaire et une vitesse de protocole requis ; la commande d'un module de limitation de courant configurable pour limiter le courant d'un ou plusieurs signaux de communication générés par le module de commande multiprotocole; la commande d'un module de routage de trajet de transmission configurable pour sélectionner un schéma de transmission ; et le réglage d'un module d'impédance configurable pour atteindre une impédance définie.

16. Procédé selon l'une quelconque des revendications 9 à 15, dans lequel l'interface matérielle se trouve à l'intérieur du module de commande multiprotocole.
